# EUROPÄISCHE PATENTSCHRIFT

(11) **EP 0 749 229 B1**
(45) Veröffentlichungstag und Bekanntmachung des Hinweises auf die Patenterteilung: **07.12.2005**
(21) Anmeldenummer: 96108909.1
(22) Anmeldetag: 04.06.1996
(51) Int. Cl.: H04M 19/08

(54) **Signalkoppelschaltung in einem Fernsprechgerät**
Signal coupling circuit in a telephone set
Circuit de couplage de signaux dans un poste téléphonique

(30) Priorität: 16.06.1995 DE 19521907
(43) Veröffentlichungstag der Anmeldung: 18.12.1996
(73) Patentinhaber: ATMEL Germany GmbH, 74072 Heilbronn (DE)
(72) Erfinder: Schnabel, Jürgen, 74211 Leingarten (DE)

(56) Entgegenhaltungen:
- DE-A- 2 829 392
- DE-A- 3 905 031
- US-A- 4 847 898
- US-A- 5 420 919

## Beschreibung

Die Erfindung betrifft eine Signalkoppelschaltung gemäß dem Oberbegriff des Patentanspruchs 1.

Die Druckschrift US 4,847,898 beschreibt eine elektronische Sprechschaltungsanordnung, die über eine erste und eine zweite Leitungsklemme an einer Telefonanschlussleitung anschließbar ist. Die elektronische Sprechschaltungsanordnung enthält eine AC-Teilschaltung und eine DC-Teilschaltung sowie einen Regelverstärker. Mittels der Schaltungsanordnung wird über die DC-Schaltung eine starre Stromspannungskennlinie mit definiertem differentiellem Widerstand erzeugt. Die AC-Teilschaltung sowie der Regelverstärker und die Stromwippenschaltung bilden eine Stromsenke im Ausgangskreis der Schaltungsanordnung, bei der der vorgegebene Soll-Strom in eine Pufferkapazität fließt und damit unabhängig von der externen Last ist. Mittels der Schaltungsanordnung wird eine hohe Stromausnutzung hinsichtlich der Sprechschaltungsanordnung und der Versorgung der externen Last erzielt.

In der US 5,420,919 ist ein Telefonapparat mit einem Sprach- und Mithörverstärker, der die Übertragung der Konversation eines anrufenden Teilnehmers über einen Lautsprecher gestattet, beschrieben. Die Schaltungsanordnung umfasst einen Generator zur Erzeugung eines Bezugsstroms sowie mehrere Stromspiegel, die einen zum Bezugsstrom proportionalen Eingangsstrom zugeführt erhalten und einen Sprach- bzw. Mithörerverstärker mit einem im Verhältnis zu dem genannten Eingangsstrom großen Strom speist. Der Telefonapparat weist einen Strommodulator auf, dessen Ruhestrom durch den Bezugsstrom gebildet und eingestellt wird und der den Eingangsstrom für den Stromspiegel liefert.

Aus dem Datenbuch "Semiconductors for Communications 1994", TEMIC, Seite 5-95 bis 5-99 ist eine Schaltung eines Fernsprechgerätes mit einer derartigen als sogenannte Gabelschaltung ausgeführten Signalkoppelschaltung bekannt. Diese Signalkoppelschaltung weist einen Übertragungsanschluß, einen Koppeleingang, einen Koppelausgang und drei in Reihe geschaltete Impedanzen auf. Der Übertragungsanschluß ist dabei über die erste Impedanz mit dem Koppeleingang verbunden, der Koppeleingang ist über die zweite Impedanz mit dem Koppelausgang verbunden und der Koppelausgang ist über die dritte Impedanz mit einem Bezugspotentialanschluß verbunden. Am Übertragungsanschluß, der mit einer Signalleitung verbunden ist, steht ein Übertragungssignal an, das aus einem zum Ubertragungsanschluß übertragenen Empfangssignal und aus einem von der Signalkoppelschaltung am Übertragungsanschluß bereitgestellten Sendesignal zusammengesetzt ist. Die Signalkoppelschaltung dient hierbei zur Auskopplung des Empfangssignals aus dem Übertragungssignal und zur Einkopplung des Sendesignals in das Übertragungssignal. Das Empfangssignal wird dabei als eine zwischen dem Koppelausgang und dem Übertragungsanschluß anstehende Ausgangsspannung ausgekoppelt und ein am Koppeleingang anstehender Eingangsstrom wird als Sendesignal in das Übertragungssignal 1 eingekoppelt. Das Sendesignal 1 wird dadurch erzeugt, daß der Eingangsstrom, d. h. ein Teil eines von einer Vermittlungsstelle auf der Signalleitung bereitgestellten Leitungsstromes, im Rhythmus des Sendesignals zu dem Bezugspotentialanschluß abgeleitet wird; der verbleibende Teil des Leitungsstromes steht dann weiteren Verbrauchern des Fernsprechgerätes, wie z.B. Mikroprozessorschaltungen, Lauthörverstärkerschaltungen, Hörkapselverstärkerschaltungen oder Freisprechschaltungen zur Verfügung. Der Eingangsstrom ist, um eine ausreichend große Modulation des Leitungsstromes zu erhalten, größer als ein Minimalstrom, so daß für die weiteren Verbraucher des Fernsprechgerätes im ungünstigsten Fall, d.h. bei großem Eingangsstrom, nur ein geringer Teil des Leitungsstromes zur Verfügung steht.

Der Erfindung liegt daher die Aufgabe zugrunde, eine Signalkoppelschaltung gemäß dem Oberbegriff des Patentanspruchs 1 anzugeben, die einen geringen Stromverbrauch aufweist.

Diese Aufgabe wird erfindungsgemäß durch die kennzeichnenden Merkmale des Patentanspruchs 1 gelöst. Vorteilhafte Ausgestaltungen und Weiterbildungen ergeben sich aus den Unteransprüchen.

Die erfindungsgemäße Signalkoppelschaltung weist neben den drei in Reihe geschalteten Impedanzen, dem Ubertragungsanschluß, dem Koppeleingang und dem Koppelausgang zusätzlich einen Verbraucheranschluß und einen Strommultiplizierer mit vier Mulitpliziereranschlüssen auf. Der Übertragungsanschluß ist hierbei über die erste Impedanz mit einem an den ersten Mulitpliziereranschluß angeschlossenen Signalanschluß verbunden, der Koppelausgang ist über die zweite Impedanz mit dem Signalanschluß und über die dritte Impedanz mit dem Bezugspotentialanschluß verbunden, der zweite Multipliziereranschluß ist mit dem Koppeleingang, der dritte Multipliziereranschluß mit dem Verbraucheranschluß und der vierte Multipliziereranschluß mit dem Bezugspotentialanschluß verbunden. Das Sendesignal, das in das Ubertragungssignal eingekoppelt wird, ist proportional 1 zu einem vom Signalanschluß zum ersten Multipliziereranschluß fließenden Signalstrom, welcher seinerseits proportional zum Eingangsstrom ist. Der Strommultiplizierer zweigt aus dem Signalstrom den am zweiten Multipliziereranschluß abfließenden Eingangsstrom und einen zum Eingangstrom proportionalen, aus einem am dritten Multipliziereranschluß anstehenden Reststrom und einem am vierten Multipliziereranschluß anstehenden Massestrom zusammengesetzten weiteren Strom ab. Der weitere Strom wird, falls er von einer am Verbraucheranschluß angeschlossenen Verbraucherschaltung aufgenommen wird, dieser als Reststrom über den dritten Multipliziereranschluß zugeführt.

Der Strommultiplizierer ist vorteilhafterweise so ausgelegt, daß der Eingangsstrom kleiner als der Signalstrom und der weitere Strom ist. Demnach reicht ein geringer Eingangsstrom aus, um ein Sendesignal mit einer ausreichend großen Amplitude zu generieren. Die Signalkoppelschaltung nimmt zwar hierzu den Signalstrom auf, jedoch kann ein Teil des Signalstroms - der am Verbraucheranschluß anstehende Reststrom - anderen Verbraucherschaltungen zugeführt werden, so daß der Gesamtstromverbrauch der Signalkoppelschaltung gering ist. Sie eignet sich demzufolge vorzüglich zum Einsatz in Schaltungen, die mit einem geringen Strom versorgt werden.

Der weitere Strom ist vorzugsweise selbst dann, wenn kein Reststrom oder nur ein Teil des weiteren Stromes aus dem Verbraucheranschluß abfließen kann, proportional zum Eingangsstrom. In diesem Fall wird der nicht als Reststrom über den Verbraucheranschluß abfließende Anteil des weiteren Stromes über den vierten Multipliziereranschluß zum Bezugspotentialanschluß abgeleitet. Auf diese Weise wird der Signalstrom und somit auch das Sendesignal des Übertragungssignals vom Reststrom entkoppelt.

Der Strommultiplizierer weist vorzugsweise eine Stromaufteilstufe mit zwei Bipolartransistoren und zwei Spannungsteilern aus jeweils 2 in Reihe geschalteten Widerständen, eine Ausgangsstufe mit einem Ausgangstransistor, eine Ansteuerstufe zur Ansteuerung der Ausgangsstufe sowie eine Subtraktionsschaltung auf. Die zwei Bipolartransistoren der Stromaufteilstufe sind als Stromspiegelschaltung geschaltet, deren Spiegelverhältnis über den Eingangsstrom und über dem weiteren Strom veränderbar ist. Der Emitter des ersten Bipolartransistors ist hierzu über den ersten Spannungsteiler und der Emitter des zweiten Bipolartransistor über den zweiten Spannungsteiler mit dem ersten Multipliziereranschluß verbunden. Die miteinander verbundenen Anschlüsse der Widerstände des ersten Spannungsteilers bilden einen ersten Spannungsteileranschluß der Stromaufteilstufe und die miteinander verbundenen Anschlüsse der Widerstände des zweiten Spannungsteilers einen zweiten Spannungsteileranschluß der Stromaufteilstufe. Am ersten Spannungsteileranschluß steht dabei der weitere Strom und am zweiten Spannungsteileranschluß der Eingangsstrom an. Der zweite Spannungsteileranschluß ist mit dem zweiten Multipliziereranschluß des Strommultiplizierers und der erste Spannungsteileranschluß mit der Ansteuerstufe und über die Kollektor-Emitter-Strecke des Ausgangstransistors der Ausgangsstufe mit dem dritten Multipliziereranschluß des Strommultiplizierers verbunden. Die Substraktionsschaltung erzeugt ein Differenzsignal, das zur Differenz der an den beiden Bipolartransistoren der Stromaufteilstufe anstehenden Kollektorströme proportional ist und durch das die Ansteuerstufe angesteuert wird. Dem Ausgangstransistor der Ausgangsstufe wird über die Ansteuerstufe ein von dem Differenzsignal abhängiger Basisstrom zugeführt. Der Emitterstrom des Ausgangstransistors und somit auch der am ersten Spannungsteileranschluß anstehende weitere Strom ist dabei um so größer, je größer das Differenzsignal ist. Das Differenzsignal hängt seinerseits über den Kollektorstrom des ersten Bipolartransistors vom Emitterpotential dieses Bipolartransistors und somit vom weiteren Strom ab, so daß man auf diese Weise eine Rückkopplung erhält, durch die der weitere Strom auf einen zum Eingangsstrom proportionalen Wert geregelt wird. Der Proportionalitätsfaktor wird dabei durch die Widerstandswerte der Widerstände aus den beiden Spannungsteilern festgelegt. Das Differenzsignal wird durch die Regelung, sofern der weitere Strom durch den ersten Spannungsteileranschluß abfließen kann, auf den Wert Null geregelt. Der am ersten Multipliziereranschluß anstehende Signalstrom ist dann unabhängig vom weiteren Strom. Um den weiteren Strom auch bei gesättigtem Ausgangstransistor fließen zu lassen, weist die Ansteuerstufe vorzugsweise einen Ableittransistor auf, über den der erste Spannungsteileranschluß der Stromaufteilstufe mit Masse verbunden ist. Der weitere Strom kann somit, falls die Kollektor-Emitter-Spannung des Ausgangstransistors einen vorteilhafterweise über einen Referenzwiderstand einstellbaren Spannungswert unterschreitet, d.h. falls die Spannung zwischen dem ersten Multipliziereranschluß und dem dritten Multipliziereranschluß eine Schwellenspannung unterschreitet, über den Ableittransistor zum Bezugspotential abgeleitet werden. Auf diese Weise wird, da der weitere Strom auch bei gesättigtem Ausgangstransistor unabhängig vom Reststrom ist, die Entkopplung des Signalstroms vom Reststrom realisiert.

Die erfindungsgemäße Signalkoppelschaltung ist überall dort einsetzbar, wo Sende- und Empfangssignale zwischen zwei oder mehreren Sende-/Empfangseinheiten über eine gemeinsame Signalleitung gleichzeitig übertragen werden; sie ist, da sie einen geringen Stromverbrauch aufweist, insbesondere in solchen Sende-/Empfangseinheiten - beispielsweise Fernsprechgeräten - einsetzbar, die über die Signalleitung gleichzeitig auch mit Strom versorgt werden.

Die Erfindung wird im folgenden anhand der Figuren 1 bis 3 näher beschrieben. Es zeigen:
- Fig. 1: ein Blockschaltbild eines Fernsprechgerätes als Ausführungsbeispiel einer Schaltungsanordnung mit einer erfindungsgemäßen Signalkoppelschaltung,
- Fig. 2: ein Schaltbild der Signalkoppelschaltung aus der Fig. 1,
- Fig. 3: ein Ausführungsbeispiel eines Strommultiplizierers der Signalkoppelschaltung aus Fig. 2.

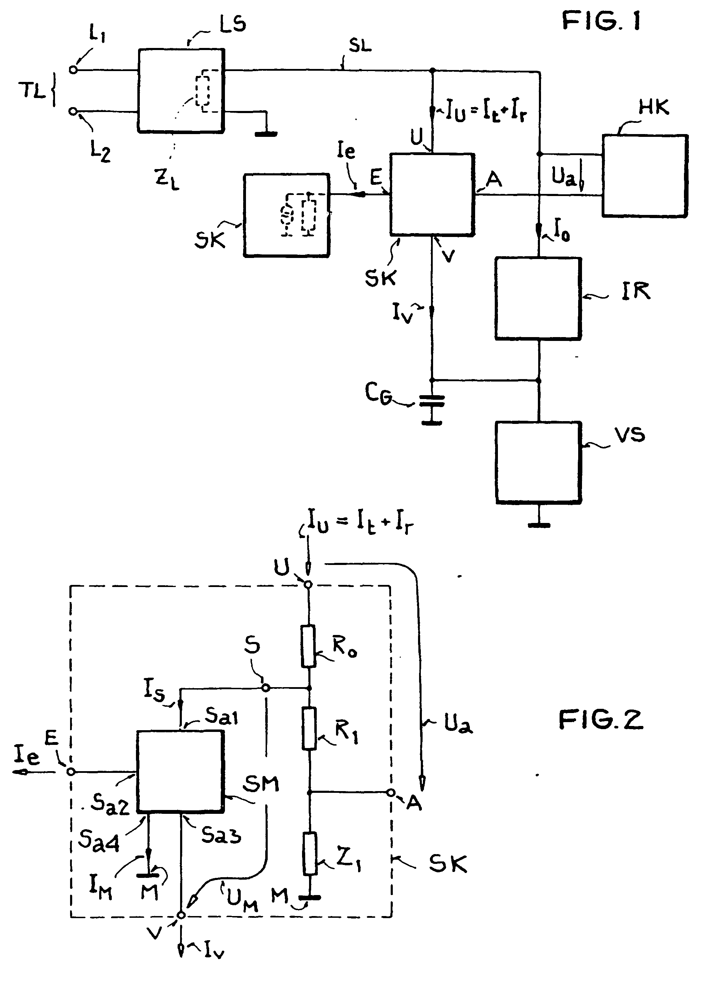

Das Fernsprechgerät aus der Figur 1 weist zwei Leitungsanschlüsse L₁, L₂ auf, an die eine mit einer Vermittlungsstelle verbundene zweiadrige Fernsprechleitung TL angeschlossen ist. Die Leitungsanschlüsse L₁ und L₂ sind über die Leitungsschnittstelle LS mit der an den Übertragungsanschluß U der Signalkoppelschaltung SK angeschlossenen einadrigen Signalleitung SL verbunden. Die in der Leitungsschnittstelle LS angedeutet eingezeichnete Impedanz stellt die von dem Ubertragungsanschluß U der Signalkoppelschaltung SK in Richtung Signalleitung SL gesehene Leitungsimpedanz Z_{L} dar. Der Hörkreis HK weist 2 hochohmige Eingänge auf, denen die zwischen dem Übertragungsanschluß U und dem Koppelausgang A der Signalkoppelschaltung SK anstehende Ausgangsspannung Uₐ zugeführt wird. Die Ausgangsspannung Uₐ wird im Hörkreis HK verstärkt und mit einem Lautsprecher oder einer Hörkapsel in ein akustisches Hörsignal gewandelt. Der Sprechkreis SK erzeugt mit einem Mikrophon oder mit einer Sprechkapsel und mit einer steuerbaren Stromquelle aus einem akustischen Sprechsignal den am Koppeleingang E der Signalkoppelschaltung SK anstehenden Eingangsstrom Iₑ. Der Eingangsstrom Iₑ wird dabei im Rhythmus des akustischen Sprechsignals zur Masse M - dem Bezugspotentialanschluß des Fernsprechgerätes - abgeleitet. Die Signalleitung SL ist über den Impedanzregelkreis IR mit der Verbraucherschaltung VS verbunden. Der Impedanzregelkreis IR dient dabei zur Regelung des vom Fernsprechgerät aufgenommenen Gleichstroms auf Werte, die für den Betrieb des Fernsprechgerätes an der Vermittlungsstelle vorgeschrieben sind. Er ist als steuerbare Stromquelle ausgeführt, die den Gleichstrom I₀ aufnimmt und diesen der Verbraucherschaltung VS zuführt. Als Verbraucherschaltung VS werden hierbei Mikroprozessorschaltungen, Freisprechschaltungen, Lauthörschaltungen oder dergleichen bezeichnet. In die Verbraucherschaltung VS wird zudem der am Verbraucheranschluß V der Signalkoppelschaltung SK anstehende Reststrom I_{V} eingespeist. Der ebenfalls an den Verbraucheranschluß V angeschlossene Glättungskondensator C_{G} dient zur Glättung der am Verbraucheranschluß V anstehenden Spannung. Am Ubertragungsanschluß U der Signalkoppelschaltung SK steht das als Leitungsstrom Iᵤ bezeichnete Übertragungssignal an. Der Leitungsstrom Iᵤ setzt sich dabei aus dem Sendestrom Iₜ - dem vom Fernsprechgerät erzeugten Sendesignal - und aus dem Empfangsstrom Iᵣ - dem über die Fernsprechleitung TL zum Fernsprechgerät und innerhalb des Fernsprechgerätes über die Signalleitung SL zur Signalkoppelschaltung SK übertragenen Empfangssignal - zusammen. Die Signalkoppelschaltung SK ist so ausgelegt, daß der Sendestrom Iₜ proportional zum Eingangsstrom Iₑ und die Ausgangsspannung Uₐ proportional zum Empfangsstrom Iᵣ ist. Da die Ausgangsspannung Uₐ demnach unabhängig vom Eingangsstrom Iₑ ist, erreicht man auf diese Weise, daß das sogenannte Rückhören, d.h. das Einkoppeln des Sprechsignals zum Hörsignal, unterdrückt wird. Ohne eine derartige Rückhörunterdrückung würde ein Sprechender sein Sprechsignal dominant hören, so daß unerwünschte Rückkopplungseffekte kaum vermeidbar wären.

Gemäß der Figur 2 ist der Übertragungsanschluß U der Signalkoppelschaltung SK über die als Widerstand ausgeführte erste Impedanz R₀ mit dem an den ersten Multipliziereranschluß Sₐ₁ des Strommultiplizierers SM angeschlossenen Signalanschluß S, der Signalanschluß S über die ebenfalls als Widerstand ausgeführte zweite Impedanz R₁ mit dem Koppelausgang A und der Koppelausgang A über die dritte Impedanz Z₁ mit Masse M verbunden. Der Koppeleingang E ist an den zweiten Multipliziereranschluß Sₐ₂ des Strommultiplizierers SM, der Verbraucheranschluß V an den dritten Multipliziereranschluß Sₐ₃ des Strommultiplizierers SM und die Masse an den vierten Multipliziereranschluß Sₐ₄ des Strommultiplizierers SM angeschlossen. In den Ubertragungsanschluß U wird der aus dem Sendestrom Iₜ und Empfangsstrom Iᵣ zusammengesetzte Leitungsstrom Iᵤ eingespeist. Ein Teil des in den ersten Multipliziereranschgluß Sₐ₁ fließenden Signalstromes Iₛ fließt als Eingangsstrom Iₑ über dem Koppeleingang E aus der Signalkoppelschaltung SK ab. Der verbleibende Teil wird, abgesehen von einem geringen zur Stromversorgung des Strommultiplizierers SM dienenden Gleichstrom, als Reststrom Iᵥ zum Verbraucheranschluß V oder als Massestrom I_{M} zur Masse M abgeleitet. Durch eine geeignete Dimensionierung der Impedanzen R₀, R₁, Z₁ erreicht man, daß eine Änderung des Eingangsstromes Iₑ zwar eine Änderung des Sendestromes Iₜ, jedoch keine Änderung der Ausgangsspannung Uₐ bewirkt. Dieses ist dann der Fall, wenn die vom Übertragungsanschluß U aus in Richtung Signalleitung SL gesehene Leitungsimpedanz Z_{L} einen Wert aufweist, der bezogen auf den Wert der ersten Impedanz R₀ gleich dem Wert der dritten Impedanz Z₁ bezogen auf den Wert der zweiten Impedanz R₁ ist, d.h. wenn die mit den Impedanzen Z_{L}, R₀, R₁, Z₁ gebildete Brückenschaltung abgeglichen ist.

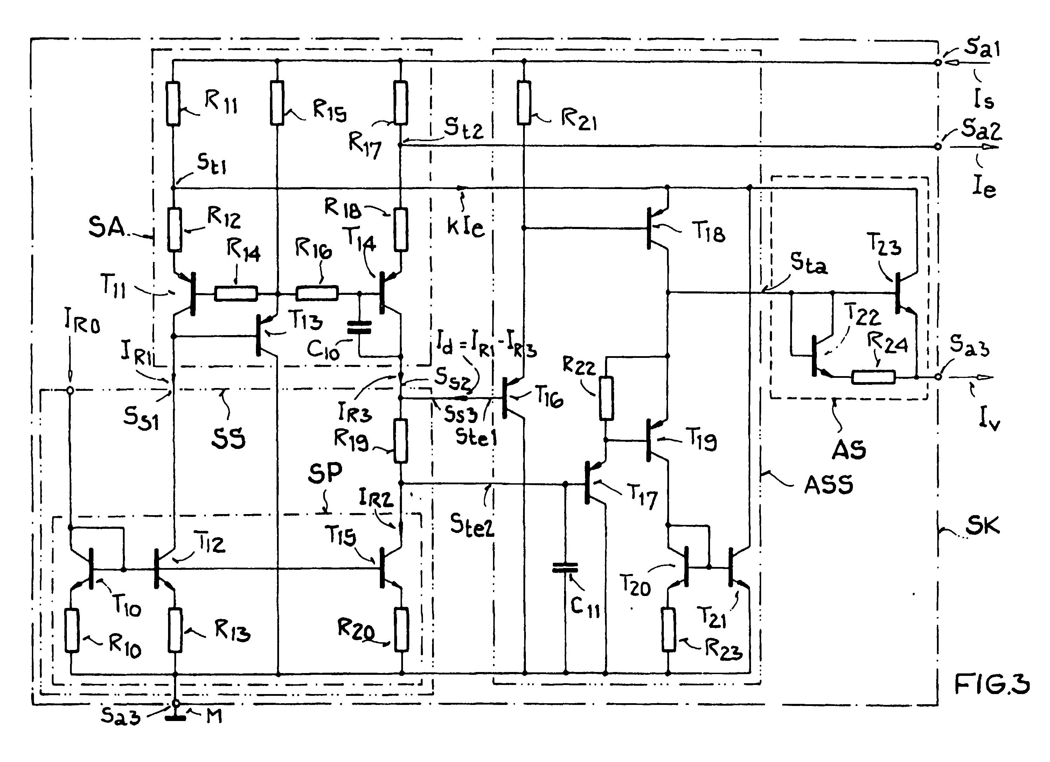

Gemäß der Figur 3, die den Strommultiplizierer SM näher beschreibt, ist der erste Multipliziereranschluß Sₐ₁ an die Stromaufteilstufe SA und an die Ansteuerstufe ASS angeschlossen, der zweite Multipliziereranschluß Sₐ₂ an die Stromaufteilstufe SA angeschlossen und der dritte Multipliziereranschluß Sₐ₃ an die Ausgangsstufe AS angeschlossen. Die Stromaufteilstufe SA ist dabei über die Subtraktionsschaltung SS mit der Ansteuerstufe ASS und über diese mit der Ausgangsstufe AS verbunden. Sie ist als Stromspiegelschaltung mit PNP-Transistoren ausgebildet, deren Spiegelverhältnis über den Eingangsstrom Iₑ und den weiteren Strom kIₑ variiert werden kann. Der erste Multipliziereranschluß Sₐ₁ ist hierzu über die beiden in Reihe geschalteten Widerstände R₁₁ und R₁₂ mit dem Emitter des ersten Bipolartransistors T₁₁ und über die beiden in Reihe geschalteten Widerstände R₁₇ und R₁₈ mit dem Emitter des zweiten Bipolartransistors T₁₄ verbunden. Die beiden Widerstände R₁₁ und R₁₂ bilden dabei den ersten Spannungsteiler und die beiden Widerstände R₁₇ und R₁₈ den zweiten Spannungsteiler der Stromaufteilstufe SA. Die miteinander verbundenen Anschlüsse der Widerstände R₁₁ und R₁₂ des ersten Spannungsteilers werden als erster Spannungsteileranschluß Sₜ₁ und die beiden miteinander verbundenen Abschlüsse der Widerstände R₁₇ und R₁₈ des zweiten Spannungsteilers als zweiter Spannungsteilanschluß Sₜ₂ der Stromaufteilstufe SA bezeichnet. Am ersten Spannungsteileranschluß Sₜ₁ steht der weitere Strom kIₑ und am zweiten Spannungsteileranschluß Sₜ₂, da er mit dem zweiten Multipliziereranschluß Sₐ₂ verbunden ist, der Eingangsstrom Iₑ an. Die Basis des ersten Bipolartransistors T₁₁ ist über die beiden in Reihe geschalteten Basiswiderstände R₁₄ und R₁₆ mit der Basis des zweiten Bipolartransistors T₁₄ verbunden. Die miteinander verbundenen Anschlüsse der Basiswiderstände R₁₄ und R₁₆ sind über den Emitterwiderstand R₁₅ mit dem ersten Multipliziereranschluß Sₐ₁ und über die Emitter-Kollektor-Strecke des dritten Bipolartransistors T₁₃ mit Masse M verbunden. Der Kollektor des ersten Bipolartransistors T₁₁ ist an die Basis des dritten Bipolartransistors T₁₃ und an den Kollektor des als erste Ruhestromquelle ausgeführten ersten Stromquellentransistors T₁₂ angeschlossen. Der Kollektor des zweiten Bipolartransistors T₁₄ ist über die erste Kapazität C₁₀ mit der Basis des zweiten Bipolartransistors T₁₄ und über den Referenzwiderstand R₁₉ mit dem Kollektor des als zweite Ruhestromquelle ausgeführten zweiten Stromquellentransistors T₁₅ verbunden. Die beiden Ruhestromquellen T₁₂, T₁₅ sind als Stromquellen einer mit den NPN-Transistoren T₁₀, T₁₂, T₁₅ realisierten Stromspiegelschaltung SP ausgebildet. Die Basis des ersten Stromquellentransistors T₁₂ und die Basis des zweiten Stromquellentransistors T₁₅ sind hierzu an die Basis und an den Kollektor des Referenzstromtransistors T₁₀, in den der Referenzstrom I_{R0} eingespeist wird, eingeschlossen. Die Emitter der Stromquellentransistoren T₁₂, T₁₅ und des Referenzstromtransistors T₁₀ sind über die Emitterwiderstände R₁₃ bzw. R₂₀ bzw. R₁₀ mit Masse M verbunden. Die Stromspiegelschaltung SP ist dabei so ausgelegt, daß der durch die erste Ruhestromquelle T₁₂ fließende erste Ruhestrom I_{R1} und der durch die zweite Ruhestromquelle T₁₅ fließende zweite Ruhestrom I_{R2} gleich sind. Sie bilden zusammen mit dem Referenzwiderstand R₁₉ die Subtraktionsschaltung SS, wobei der Kollektor des ersten Stromquellentransistors T₁₂ den als ersten Subtraktionseingang Sₛ₁ bezeichneten und der mit dem Kollektor des zweiten Bipolartransistors T₁₄ verbundene Anschluß des Referenzwiderstandes R₁₉ den als zweiten Subtraktionseingang Sₛ₂ bezeichneten Eingang der Subtraktionsschaltung SS darstellt. Der mit dem zweiten Subtraktionseingang Sₛ₂ direkt verbundene Subtraktionsausgang Sₛ₃ der Subtraktionsschaltung SS ist über den Steuereingang Sₜₑ₁ der Ansteuerschaltung ASS an die Basis des als PNP-Transistor ausgeführten Eingangstransistors T₁₆ angeschlossen. Da der durch die erste Ruhestromquelle T₁₂ fließende erste Ruhestrom I_{R1} gleich dem durch die zweite Ruhestomquelle T₁₅ fließenden zweiten Ruhestrom I_{R2} ist, ist das am Subtraktionsausgang Sₛ₃ der Subtraktionsschaltung SS anstehende Differenzsignal, d.h. der aus der Basis des Eingangstransistors T₁₆ zur Substraktionsschaltung SS fließende Differenzstrom I_{d}, gleich der Differenz I_{R1} - I_{R3} aus dem ersten Ruhestrom I_{R1} und dem Kollektorstrom I_{R3} des zweiten Bipolartransistors T₁₄. Der Eingangstransistor T₁₆ der Ansteuerschaltung ASS ist als Emitterfolger geschaltet; sein Kollektor ist mit Masse M und sein Emitter mit der Basis des als PNP-Transistor ausgeführten Steuertransistors T₁₈ und über den Emitterwiderstand R₂₁ mit dem ersten Multipliziereranschluß Sₐ₁ des Strommultiplizierers SM verbunden. Der erste Spannungsteileranschluß Sₜ₁ der Stromaufteilstufe SA ist an den Emitter des Steuertransistors T₁₈ und an den Kollektor des als NPN-Transistor ausgeführten Ableittransistors T₂₁ angeschlossen. Die Basis des Ableittransistors T₂₁ ist mit der Basis und dem Kollektor des NPN-Transistors T₂₀ sowie mit dem Kollektor des PNP-Transitors T₁₉ und über dessen Kollektor-Emitter-Strecke mit dem Kollektor des Steuertransistors T₁₈ verbunden. Der Emitter des NPN-Transistors T₂₀ ist über dem Emitterwiderstand R₂₃ an den mit Masse M verbundenen Emitter des Ableittransistors T₂₁ angeschlossen. Der Kollektor des Steuertransistors T₁₈ ist über den Widerstand R₂₂ mit der Basis des PNP-Transistors T₁₉ und mit dem Emitter des PNP-Transistors T₁₇ sowie über die Emitter-Kollektor-Strecke des PNP-Transistors T₁₇ mit Masse M verbunden. Die Basis des PNP-Transistors T₁₇ ist über den weiteren Steuereingang Sₜₑ₂ der Ansteuerschaltung ASS an den Kollektor des zweiten Stromquellentransistors T₁₅ der Subtraktionsschaltung SS und über die zweite Kapazität C₁₁ an Masse M angeschlossen.

Der Ausgangstransistor T₂₃ der Ausgangsstufe AS ist als NPN-Transistor ausgeführt. Sein Kollektor ist an den ersten Spannungsteileranschluß Sₜ₁ der Stromaufteilstufe SA, seine Basis über den Steuerausgang Sₜₐ der Ansteuerstufe ASS an den Kollektor des Steuertransistors T₁₈ und sein Emitter an den dritten Multipliziereranschluß Sₐ₃ angeschlosssen. Seine Basis und sein Emitter sind zudem über den als Diode geschalteten NPN-Transistor T₂₂ und den in Reihe dazu geschalteten Widerstand R₂₄ miteinander verbunden. Der erste Spannungsteiler wird durch den Ausgangstransistor T₂₃ oder den Ableittransistor T₂₁ in Abhängigkeit des Differenzstromes I_{d} belastet. Der Kollektorstrom des Ausgangstransistors T₂₃ bzw. des Ableittransistors T₂₁ ist um so größer, je größer der Kollektorstrom des Steuertransistors T₁₈, d.h. je größer der durch die Basis des Eingangstransistors T₁₆ fließende Differenzstrom I_{d} ist. Der durch den ersten Stromteileranschluß Sₜ₁ fließende weitere Strom kIₑ wird demnach durch den Differenzstrom I_{d} festgelegt. Da die Emitterpotentiale und somit auch die Kollektorströme der beiden Bipolartransistoren T₁₁ und T₁₄ von dem weiteren Strom kIₑ bzw. vom Eingangsstrom Iₑ abhängen, hängt der Differenzstrom I_{d} seinerseits vom Eingangsstrom Iₑ und vom weiteren Strom kIₑ ab. Auf diese Weise erhält man eine Rückkopplung durch die der weitere Strom kIₑ auf einen zum Eingangsstrom Iₑ proportionalen Wert geregelt wird. Der Proportionalitätsfaktor k wird dabei durch die Werte der Widerstände R₁₁, R_{12,} R₁₇ und R₁₈ festgelegt. Diese Widerstände sind so dimensioniert, daß, falls der Eingangsstrom Iₑ um den Proportionalitätsfaktor k mal kleiner als der weitere Strom kIₑ ist, der erste Ruhestrom I_{R1} und der Kollektorstrom I_{R3} des zweiten Bipolartransistors T₁₄ gleich sind. Der Kollektorstrom I_{R3} wird dabei dem ersten Ruhestrom I_{R1} nachgeführt. Wenn beispielsweise die Werte der Widerstände R₁₂ und R₁₇ 380 Ω betragen und die Werte der Widerstände R₁₁ und R₁₈ 20 Ω betragen, d.h. 19 mal kleiner sind, ist der weitere Strom kIₑ 19 mal größer und der Signalstrom Iₛ 20 mal größer als der Eingangsstrom Iₑ. Da die Ruheströme I_{R1}, I_{R2} und der Emitterstrom des Eingangstransistors T₁₆ gegenüber dem Signalstrom Iₛ vernachlässigbar klein sind, ist der Signalstrom Iₛ näherungsweise gleich der Summe aus dem Eingangsstrom Iₑ und dem weiteren Strom kIₑ. Demnach werden, sofern die Spannung zwischen dem ersten und dem dritten Multipliziereranschluß Sₐ₁ und Sₐ₃ eine Schwellwertspannung von beispielsweise 1,4 Volt nicht unterschreitet, 19/20, d.h. 95 % des zur Erzeugung des Sendestromes Iₜ erforderlichen Signalsstromes Iₛ als Ruhestrom Iᵥ der an dem Verbraucheranschluß V angeschlossenen Verbraucherschaltung VS nutzbringend zugeführt. Lediglich 5 % des Signalstromes Iₛ - der Eingangsstrom Iₑ - wird durch den an den Koppeleingang E angeschlossenen Sprechkreis SK nach Maßgabe des akustischen Sprechsignals zur Masse abgeleitet. Falls die Spannung U_{M} zwischen dem ersten und dem dritten Multipliziereranschluß Sₐ₁ und Sₐ₃ die Schwellwertspannung unterschreitet, d.h. falls die Kollektor-Emitter-Spannung des Ausgangstransistors T₂₃ so klein wird, daß nicht mehr der gesamte weitere Strom kIₑ aus dem dritten Multipliziereranschluß Sₐ₃ abfließen kann, nimmt die Kollektor-Emitter-Spannung des Steuertransistors T₁₈ einen Minimalwert an, der etwa so groß ist, wie die am Referenzwiderstand R₁₉ anstehende Spannung. Dadurch werden das Kollektorpotential des Steuertransistors T₁₈ und folglich auch die Emitterpotentiale der beiden PNP-Transistoren T₁₇ und T₁₉ angehoben. Da die PNP-Transistoren T₁₇ und T₁₉ hierdurch leitend werden, erhält der Ableittransistor T₂₁ einen Basisstrom, so daß er seinerseits leitend geworden den weiteren Strom kIₑ oder einen Teil davon zur Masse M ableitet.

Mit der ersten bzw. zweiten Kapazität C₁₀ bzw. C₁₁ wird die durch die Rückkopplung zur Regelung des weiteren Stromes kIₑ bzw. durch das Ein- und Ausschalten des Ableittransistors T₂₁ bedingte Schwingungsneigung des Strommultiplizierer SM unterdrückt.

## Patentansprüche

1. Signalkoppelschaltung:
- mit einem Übertragungsanschluß (U), an dem ein Übertragungssignal (Iᵤ) ansteht,
- mit einem Koppeleingang (E) an dem ein in das Übertragungssignal (Iᵤ) einkoppelbarer Eingangsstrom (Iₑ) ansteht,
- mit einem Koppelausgang (A) für eine aus dem Ubertragungssignal (Iᵤ) auskoppelbare Ausgangsspannung (Uₐ), die zwischen dem Übertragungsanschluß (U) und dem Koppelausgang (A) ansteht, und
- mit drei in Reihe geschalteten Impedanzen (R₀, R₁, Z₁), wobei der Übertragungsanschluß (U) über die erste Impedanz (Rₒ) mit einem Signalanschluß (S), der Signalanschluß (S) über die zweite Impedanz (R₁) mit dem Koppelausgang (A) und der Koppelausgang (A) über die dritte Impedanz (Z₁) mit einem Bezugspotentialanschluß (M) verbunden ist,
**dadurch gekennzeichnet, daß** die Signalkoppelschaltung (SK) einen Strommultiplizierer (SM) mit einem an den Signalanschluß (S) angeschlossenen ersten Multipliziereranschluß (Sₐ₁), an dem ein zum Eingangsstrom (Iₑ) proportionaler Signalstrom (Iₛ) ansteht, mit einem an den Koppeleingang (E) angeschlossenen zweiten Multipliziereranschluß (Sₐ₂), mit einem an einen Verbraucheranschluß (V) angeschlossenen dritten Multipliziereranschluß (Sₐ₃), an dem ein Reststrom (Iᵥ) ansteht, und mit einem an den Bezugspotentialanschluß (M) angeschlossenen vierten Multipliziereranschluß (Sₐ₄), an dem ein Massestrom (I_{M}) ansteht, aufweist, wobei der Signalstrom (Iₛ) gleich der Summe aus dem Eingangsstrom (Iₑ), Reststrom (Iᵥ) und Massestrom (I_{M}) ist.

2. Signalkoppelschaltung nach Anspruch 1, **dadurch gekennzeichnet, daß** der Massestrom (I_{M}), sofern die Spannung (U_{M}) zwischen dem ersten und dem dritten Multipliziereranschluß (Sₐ₁, Sₐ₃) eine Schwellwertspannung nicht unterschreitet, gegenüber dem Reststrom (Iᵥ) vernachlässigbar klein ist.

3. Signalkoppelschaltung nach einem der vorherigen Ansprüche, **dadurch gekennzeichnet, daß** der Strommultiplizierer (SM)
- eine Stromaufteilstufe (SA) mit zwei Bipolartransistoren (T₁₁, T₁₄) und mit zwei Spannungsteilern aus jeweils zwei in Reihe geschalteten Widerständen (R₁₁, R₁₂; R₁₇, R₁₈) aufweist, wobei der Emitter des ersten Bipolartransistors (T₁₁) über die Widerstände (R₁₁, R₁₂) des ersten Spannungsteilers mit dem ersten Multipliziereranschluß (Sₐ₁) verbunden ist, der Emitter des zweiten Bipolartransistors (T₁₄) über die Widerstände (R₁₇, R₁₈) des zweiten Spannungsteilers mit dem ersten Multipliziereranschluß (Sₐ₁) verbunden ist, die miteinander verbundenen Anschlüsse (Sₜ₂) der Widerstände (R₁₇, R₁₈) des zweiten Spannungsteilers an den zweiten Multipliziereranschluß (Sₐ₂) angeschlossen sind und die Basis des ersten Bipolartransistors (T₁₁) mit der Basis des zweiten Bipolartransistors (T₁₄) verbunden ist, so daß ein als Kollektorstrom am Kollektor des ersten Bipolartransistors (T₁₁) anstehender erster Ruhestrom (I_{R1}) proportional zu einem am Kollektor des zweiten Bipolartransistors (T₁₄), anstehenden Kollektorstrom (I_{R3}) ist,
- eine Ausgangsstufe (AS) mit einem Ausgangstransistor (T₂₃) aufweist, über dessen Emitter-Kollektor-Strecke die miteinander verbundenen Anschlüsse (Sₜ₁) der Widerstände (R₁₁, R₁₂) des ersten Spannungsteilers mit dem dritten Multipliziereranschluß (Sₐ₃) verbunden ist,
- eine Ansteuerstufe (ASS) zur Ansteuerung der Ausgangsstufe (AS) mit einem mit der Basis des Ausgangstransistors (T₂₃) der Ausgangsstufe (AS) verbundenen Steuerausgang (Sₜₐ) und mit einem Steuereingang (Sₜₑ₁) aufweist
- und eine Subtraktionsschaltung (SS) mit einem mit dem Kollektor des ersten Bipolartransistors (T₁₁) der Stromaufteilstufe (SA) verbundenen ersten Subtraktionseingang (Sₛ₁), mit einem mit dem Kollektor des zweiten Bipolartransistors (T₁₄) der Stromaufteilstufe (SA) verbundenen zweiten Subtraktionseingang (Sₛ₂) und mit einem mit dem Steuereingang (Sₜₑ₁) der Ansteuerstufe (ASS) verbundenen Subtraktionausgang (Sₛ₃) aufweist, wobei am Subtraktionsausgang (Sₛ₃) ein zur Differenz des Kollektorstromes (I_{R1}) des ersten Bipolartransistors (T₁₁) und des Kollektorstromes (I_{R3}) des zweiten Bipolartransistors (T₁₄) proportionales Differenzsignal (I_{d}) ansteht.

4. Signalkoppelschaltung nach Anspruch 3, **dadurch gekennzeichnet, daß** die Substraktionsschaltung (SS) zwei als Spiegelstromquellen einer Stromspiegelschaltung (SP) ausgeführte Ruhestromquellen (T₁₂, T₁₅) aufweist, die an jeweils einen der beiden Substraktionseingänge (Sₛ₁, Sₛ₂) angeschlossen sind, wobei der zweite Subtraktionseingang (Sₛ₂) mit dem Subtraktionsausgang (Sₛ₃) verbunden ist.

5. Signalkoppelschaltung nach Anspruch 4, **dadurch gekennzeichnet, daß** die Ansteuerstufe (ASS) einen Ableittransistor (T₂₁) und einen weiteren Steuereingang (Sₜₑ₂) zur Ansteuerung des Ableittransistors (T₂₁) aufweist, wobei die miteinander verbundenen Anschlüsse (Sₜ₁) der Widerstände (R₁₁, R₁₂) des ersten Spannungsteilers über die Kollektor-Emitter-Strecke des Ableittransistors (T₂₁) an den Bezugspotentialanschluß (M) angeschlossen sind.

6. Signalkoppelschaltung nach Anspruch 5, **dadurch gekennzeichnet, daß** die Subtraktionsschaltung (SS) einen Referenzwiderstand (R₁₉) aufweist, über den der zweite Substraktionseingang (Sₛ₂) und der Subtraktionsausgang (Sₛ₃) mit der zweiten Ruhestromquelle (T₁₅) und mit dem weiteren Steuereingang (Sₜₑ₂) der Ansteuerstufe (ASS) verbunden ist.

7. Signalkoppelschaltung nach Anspruch 6, **dadurch gekennzeichnet, daß** der Ableittransistor (T₂₁) der Ansteuerstufe (ASS) dann leitend ist, wenn die Kollektor-Emitter-Spannung des Ausgangstransistors (T₂₃) der Ausgangsstufe (AS) einen vom Referenzwiderstand (R₁₉) abhängigen Wert unterschreitet.

8. Verwendung einer Signalkoppelschaltung nach einem der vorherigen Ansprüche in einem Fernsprechgerät zur Entkopplung eines über eine Fernsprechleitung (TL) zu einer Signalleitung (SL) des Fernsprechgerät übertragenen Empfangssignals (Iᵣ) von einem von der Signalleitung (SL) des Fernsprechgerätes zur Fernsprechleitung (TL) übertragenen Sendesignal (Iₜ).

## Claims

1. Signal coupling circuit:
- with a transmission connection (U), at which a transmission signal (Iᵤ) is present,
- with a coupling input (E) at which an input current (Iₑ), which can be coupled into the transmission signal (Iᵤ), is present,
- with a coupling output (A) for an output voltage (Uₐ), which can be coupled out of the transmission signal (Iᵤ) and which is present between the transmission connection (U) and the coupling output (A), and
- with three impedances (R₀, R₁, Z₁) connected in series, wherein the transmission connection (U) is connected by way of the first impedance (R₀) with a signal connection (S), the signal connection (S) is connected by way of the second impedance (R₁) with the coupling output (A) and the coupling output (A) is connected by way of the third impedance (Z₁) with a reference potential connection (M),
**characterised in that** the signal coupling circuit (SK) comprises a current multiplier (SM) with a first multiplier connection (Sₐ₁), which is connected with the signal connection (S) and at which a signal current (Iₛ) proportional to the input current (Iₑ) is present, with a second multiplier connection (Sₐ₂), which is connected with the coupling input (E), with a third multiplier connection (Sₐ₃), which is connected with a load connection (V) and at which a quiescent current (Iᵥ) is present, and with a fourth multiplier connection (Sₐ₄), which is connected with the reference potential connection (M) and at which an earth current (I_{M}) is present, wherein the signal current (Iₛ) is equal to the sum of the input current (Iₑ), quiescent current (Iᵥ) and earth current (I_{M}).

2. Signal coupling circuit according to claim 1, **characterised in that** the earth current (I_{M}) is negligibly small relative to the quiescent current (Iᵥ) insofar as the voltage (U_{M}) between the first and the third multiplier connections (Sₐ₁, Sₐ₃) does not fall below a threshold value voltage.

3. Signal coupling circuit according to one of the preceding claims, **characterised in that** the current multiplier (SM) comprises
- a current dividing stage (SA) with two bipolar transistors (T₁₁, T₁₄) and with two voltage dividers each consisting of two resistors (R₁₁, R₁₂; R₁₇, R₁₈) connected in series, wherein the emitter of the first bipolar transistor (T₁₁) is connected by way of the resistors (R₁₁, R₁₂) of the first voltage divider with the first multiplier connection (Sₐ₁), the emitter of the second bipolar transistor (T₁₄) is connected by way of the resistors (R₁₇, R₁₈) of the second voltage divider with the first multiplier connection (Sₐ₁), the interconnected connections (Sₜ₂) of the resistors (R₁₇, R₁₈) of the second voltage divider are connected with the second multiplier connection (Sₐ₂), and the base of the first bipolar transistor (T₁₁) is connected with the base of the second bipolar transistor (T₁₄), so that a first quiescent current (I_{R1}), which is present at the collector of the first bipolar transistor (T₁₁), as collector current is proportional to a collector current (I_{R3}) present at the collector of the second bipolar transistor (T₁₄),
- an output stage (AS) with an output transistor (T₂₃), by way of the emitter-collector path of which the interconnected connections (Sₜ₁) of the resistors (R₁₁, R₁₂) of the first voltage divider are connected with the third multiplier connection (Sₐ₃),
- a drive control stage (ASS) for drive control of the output stage (AS) with a control output (Sₜₐ), which is connected with the base of the output transistor (T₂₃) of the output stage (AS), and with a control input (Sₜₑ₁), and
- a subtraction circuit (SS) with a first subtraction input (Sₛ₁) connected with the collector of the first bipolar transistor (T₁₁) of the current divider stage (SA), with a second subtraction input (Sₛ₂) connected with the collector of the second bipolar transistor (T₁₄) of the current divider stage (SA), and with a subtraction output (Sₛ₃) connected with the control input (Sₜₑ₁) of the drive control stage (ASS), wherein a different signal (I_{d}) proportional to the difference of the collector current (I_{R1}) of the first bipolar transistor (T₁₁) and the collector current (I_{R3}) of the second bipolar transistor (T₁₄) is present at the subtraction output (Sₛ₃).

4. Signal coupling circuit according to claim 3, **characterised in that** the subtraction circuit (SS) comprises two quiescent current sources (T₁₂, T₁₅), which are constructed as image current sources of an image current circuit (SP) and which are each connected with a respective one of the two subtraction inputs (Sₛ₁, Sₛ₂), wherein the second subtraction input (Sₛ₂) is connected with the subtraction output (Sₛ₃).

5. Signal coupling circuit according to claim 4, **characterised in that** the drive control stage (ASS) comprises a bypass transistor (T₂₁) and a further control input (Sₜₑ₂) for drive control of the bypass transistor (T₂₁), wherein the interconnected connections (Sₜ₁) of the resistances (R₁₁, R₁₂) of the first voltage divider are connected by way of the collector-emitter path of the bypass transistor (T₂₁) with the reference potential connection (M).

6. Signal coupling circuit according to claim 5, **characterised in that** the subtraction circuit (SS) comprises a reference resistor (R₁₉), by way of which the second subtraction input (Sₛ₂) and the subtraction output (Sₛ₃) are connected with the second quiescent current source (T₁₅) and with the further control input (Sₜₑ₂) of the drive control stage (ASS).

7. Signal coupling circuit according to claim 6, **characterised in that** the bypass transistor (T₂₁) of the drive control circuit (ASS) is conductive when the collector-emitter voltage of the output transistor (T₂₃) of the output stage (AS) falls below a value dependent on the reference resistor (R₁₉).

8. Use of a signal coupling circuit according to one of the preceding claims in a telephone apparatus for decoupling a received signal (Iᵣ), which is transmitted by way of a telephone line (TL) to a signal line (SL) of the telephone apparatus, from a transmitted signal (Iₜ), which is transmitted by the signal line (SL) of the telephone apparatus to the telephone line (TL).

## Revendications

1. Circuit de couplage de signaux comprenant :
• une borne de transmission (U) sur laquelle existe un signal de transmission (Iᵤ),
• une entrée de couplage (E) recevant un courant d'entrée (Iₑ) pouvant être mélangé au signal de transmission (Iᵤ),
• une sortie de couplage (A) pour une tension de sortie (Uₐ) pouvant être extraite du signal de transmission (Iᵤ), existant entre la borne de transmission (U) et la sortie de couplage (A),
• trois impédances (R₀, R₁, Z₁) montées en série, la borne de transmission (U) étant reliée à une borne de signal (S) par l' intermédiaire de la première impédance (R₀), la borne de signal (S) étant reliée à la sortie de couplage (A) par l'intermédiaire de la deuxième impédance (R₁), et la sortie de couplage (A) étant reliée à une borne de potentiel de référence (M) par l'intermédiaire de la troisième impédance (Z₁),
**caractérisé en ce que** le circuit de couplage de signaux (SK) présente un multiplicateur de courant (SM) comprenant une première borne de multiplication (Sₐ₁) connectée à la borne de signal (S), sur laquelle existe un courant de signal (Iₛ) proportionnel au courant d'entrée (Iₑ), comprenant une deuxième borne de multiplication (Sₐ₂) connectée à l'entrée de couplage (E), comprenant une troisième borne de multiplication (Sₐ₃) connectée à une borne de sortie (V), sur laquelle existe un courant résiduel (Iᵥ), et comprenant une quatrième borne de multiplication (Sₐ₄) connectée à la borne de potentiel de référence (M), sur laquelle existe un courant de masse (I_{M}), le courant de signal (Iₛ) étant égal à la somme du courant d'entrée (Iₑ), du courant résiduel (Iᵥ) et du courant de masse (I_{M}).

2. Circuit de couplage de signaux selon la revendication 1, **caractérisé en ce que** le courant de masse (I_{M}) est suffisamment faible par rapport au courant résiduel (Iᵥ) pour être négligeable, dans la mesure où la tension (U_{M}) entre la première et la troisième borne de multiplication (Sₐ₁, Sₐ₃) ne descend pas en-dessous d'une tension de seuil.

3. Circuit de couplage de signaux selon l'une quelconque des revendications précédentes, **caractérisé en ce que** le multiplicateur de courant (SM) présente :
• un étage diviseur de courant (SA) comprenant deux transistors bipolaires (T₁₁, T₁₄) et deux diviseurs de tension provenant respectivement de deux résistances montées en série (R₁₁, R₁₂ ; R₁₇, R₁₈), l'émetteur du premier transistor bipolaire (T₁₁) étant relié à la première borne de multiplication (Sₐ₁) par l'intermédiaire des résistances (R₁₁, R₁₂), du premier diviseur de tension, l'émetteur du deuxième transistor bipolaire (T₁₄) étant relié à la première borne de multiplication (Sₐ₁) par l'intermédiaire des résistances (R₁₇, R₁₈) du deuxième diviseur de tension, les bornes (Sₜ₂) communes des résistances (R₁₇, R₁₈) du deuxième diviseur étant connectées à la deuxième borne de multiplication (Sₐ₂), et la base du premier transistor bipolaire (T₁₁) étant reliée à la base du deuxième transistor bipolaire (T₁₄), de sorte qu'un courant de repos (I_{R1}) existant comme courant de collecteur sur le collecteur du premier transistor bipolaire (T₁₁) est proportionnel à un courant de collecteur (I_{R3}) existant sur le collecteur du deuxième transistor bipolaire (T₁₄),
• un étage de sortie (AS) comprenant un transistor de sortie (T₂₃), par le circuit émetteur-collecteur duquel les bornes (Sₜ₁) communes des résistances (R₁₁, R₁₂) du premier diviseur de tension sont reliées à la troisième borne de multiplication (Sₐ₃),
• un étage de commande (ASS) pour commander l'étage de sortie (AS) comprenant une sortie de commande (Sₜₐ) reliée à la base du transistor de sortie (T₂₃) de l'étage de sortie (AS) et comprenant une entrée de commande (Sₜₑ₁),
• et un circuit de soustraction (SS) comprenant une première entrée de soustraction (Sₛ₁) reliée au collecteur du premier transistor bipolaire (T₁₁) de l'étage de division de courant (SA), comprenant une deuxième entrée de soustraction (Sₛ₂) reliée au collecteur du deuxième transistor bipolaire (T₁₄) de l'étage de division de courant (SA) et comprenant une sortie de soustraction (Sₛ₃) reliée à l'entrée de commande (Sₜₑ₁) de l'étage de commande (ASS), un signal différentiel (I_{d}) proportionnel à la différence entre le courant collecteur (I_{R1}) du premier transistor bipolaire (T₁₁) et le courant collecteur (I_{R3}) du deuxième transistor bipolaire (T₁₄) existant sur la sortie de soustraction (Sₛ₃).

4. Circuit de couplage de signaux selon la revendication 3, **caractérisé en ce que** le circuit de soustraction (SS) présente deux sources de courant de repos (T₁₂, T₁₅) conformées en sources de courant miroir d'un circuit électrique miroir (SP), connectées respectivement à l'une des deux entrées de soustraction (Sₛ₁, Sₛ₂), la deuxième entrée de soustraction (Sₛ₂) étant reliée à la sortie de soustraction (Sₛ₃).

5. Circuit de couplage de signaux selon la revendication 4, **caractérisé en ce que** l'étage de commande (ASS) présente un transistor de fuite (T₂₁) et une entrée de commande (Sₜₑ₂) supplémentaire pour commander le transistor de fuite (T₂₁), les bornes (Sₜ₁) communes des résistances (R₁₁, R₁₂) du premier diviseur de tension étant connectées à la borne de potentiel de référence (M) par l'intermédiaire du circuit collecteur-émetteur du transistor de fuite (T₂₁).

6. Circuit de couplage de signaux selon la revendication 5, **caractérisé en ce que** le circuit de soustraction (SS) présente une résistance de référence (R₁₉)_{'} par l'intermédiaire de laquelle la deuxième entrée de soustraction (Sₛ₂) et la sortie de soustraction (Sₛ₃) sont reliées à la deuxième source de courant de repos (T₁₅) et à l'entrée de commande (Sₜₑ₂) supplémentaire de l'étage de commande (ASS).

7. Circuit de couplage de signaux selon la revendication 6, **caractérisé en ce que** le transistor de fuite (T₂₁) de l'étage de commande (ASS) est conducteur lorsque la tension collecteur-émetteur du transistor de sortie (T₂₃) de l'étage de sortie (AS) descend en-dessous d'une valeur fonction de la résistance de référence (R₁₉).

8. Utilisation d'un circuit de couplage de signaux selon l'une quelconque des revendications précédentes dans un poste téléphonique pour séparer un signal de réception (Iᵣ) transmis par une ligne téléphonique (TL) à une ligne de signal (SL) du poste téléphonique, d'un signal d'émission (Iₜ) transmis par la ligne de signal (SL) du poste téléphonique à la ligne téléphonique (TL).
